Europäisches Patentamt

(19) European Patent Office

Office européen des brevets

(11) Numéro de publication : **0 036 088**
**B1**

(12) **FASCICULE DE BREVET EUROPÉEN**

(45) Date de publication du fascicule du brevet :
28.11.84

(21) Numéro de dépôt : **81101139.4**

(22) Date de dépôt : **18.02.81**

(51) Int. Cl.³ : **A 21 C   3/06**, A 21 C   9/06

(54) Dispositif pour enrouler des morceaux de matière en forme de feuilles.

(30) Priorité : 06.03.80 SE 8001770

(43) Date de publication de la demande :
23.09.81 Bulletin 81/38

(45) Mention de la délivrance du brevet :
28.11.84 Bulletin 84/48

(84) Etats contractants désignés :
AT BE CH DE FR GB LI

(56) Documents cités :
DE-A- 2 909 296
DE-C-   443 335
US-A- 3 946 656

(73) Titulaire : **FRISCO-FINDUS AG**
**CH-9400 Rorschach (CH)**

(72) Inventeur : **Lundgren, Bror Ferdinand**
**Krursbärsgatan 4**
**Bjuv (SE)**

Jouve, 18, rue St-Denis, 75001 Paris, France

EP 0 036 088 B1

## Description

La présente invention concerne un dispositif pour enrouler des morceaux de matière molle en forme de feuilles, afin de donner des rouleaux. L'invention se rapporte particulièrement à un dispositif pour l'enroulement de produits alimentaires plans tels que les crêpes, avec ou sans farce, les génoises, croissants ou les roulades ou paupiettes de viande.

Les crêpes garnies constituent un produit alimentaire qui devient de plus en plus populaire parmi les consommateurs. De tels produits sont préparés par enroulement des crêpes cuites autour d'une farce appropriée, et vendus sous cette forme, souvent à l'état congelé. Pour la consommation, il suffit de réchauffer le produit dans un four, une poêle, etc.

Dans la fabrication industrielle des crêpes enroulées, l'enroulement même de la crêpe autour de la farce est une phase critique du processus. Pour avoir une production économique, il est nécessaire qu'elle s'effectue mécaniquement et en continu, ce qui présente de grandes difficultés. La manipulation des crêpes aussi bien avant que pendant et après l'enroulement est difficile, car le produit est fragile et supporte mal les contraintes mécaniques, se désagrège et, par conséquent, devient inacceptable pour le consommateur. En outre, il est difficile d'obtenir un processus dans lequel les crêpes sont amenées en continu jusqu'à l'enroulement, sont enroulées, puis à l'état enroulé transportées jusqu'au poste d'emballage.

Plusieurs dispositifs sont connus pour l'enroulement de produits alimentaires et spécialement pour la production de génoise roulée. Toutefois, ces dispositifs sont de conception très compliquée et, dans la majorité des cas, ils ne peuvent pas être adaptés à l'enroulement des crêpes qui sont sensiblement plus minces et plus fragiles (DE-C-443335 et US-A-3946656).

La présente invention met maintenant à disposition un dispositif de conception simple au moyen duquel des morceaux de matière en forme de feuilles, et particulièrement des crêpes cuites, peuvent être manipulées d'une manière très ménageante, depuis l'alimentation du dispositif d'enroulement, lors de l'enroulement et jusqu'au transport à l'état enroulé pour traitement ultérieur.

Cela est réalisé selon l'invention en ce que les morceaux de matière sont alimentés sur une bande sans fin essentiellement horizontale et amenés à toucher au moins une autre bande sans fin disposée de manière que la partie de l'autre bande qui touche le morceau de matière ait un mouvement oblique ascendant par rapport à la direction de la première bande.

Le dispositif d'enroulement de morceaux de matière molle en forme de feuilles selon l'invention est caractérisé en ce qu'il comprend plusieurs bandes sans fin, chaque bande étant constituée de plusieurs éléments sans fin espacés entre eux et parallèles à la direction du mouvement de la bande, une première bande se déplaçant essentiellement dans un plan horizontal et au moins une deuxième bande se déplaçant sur un tronçon actif dans un plan oblique par rapport au plan de la première bande, de sorte qu'elle croise la première bande par défilement vers le haut de ses éléments dans les espaces entre les éléments de la première bande selon une ligne d'intersection formant un angle aigu avec la direction du mouvement de la première bande selon une ligne d'intersection formant un angle aigu avec la direction du mouvement de la première bande, l'aval de la première bande formant avec l'aval du tronçon actif de la deuxième un angle obtus, mesuré dans un plan perpendiculaire à leur ligne d'intersection, la direction du mouvement de la deuxième bande formant un angle aigu avec la ligne d'intersection des deux bandes, dans la direction de la partie de ladite ligne située la plus en aval sur la première bande.

L'invention sera mieux comprise, et d'autres buts, caractéristiques, détails et avantages de celle-ci, apparaîtront plus clairement au cours de la description explicative qui va suivre, faite par référence aux dessins schématiques annexés donnés à titre d'exemple.

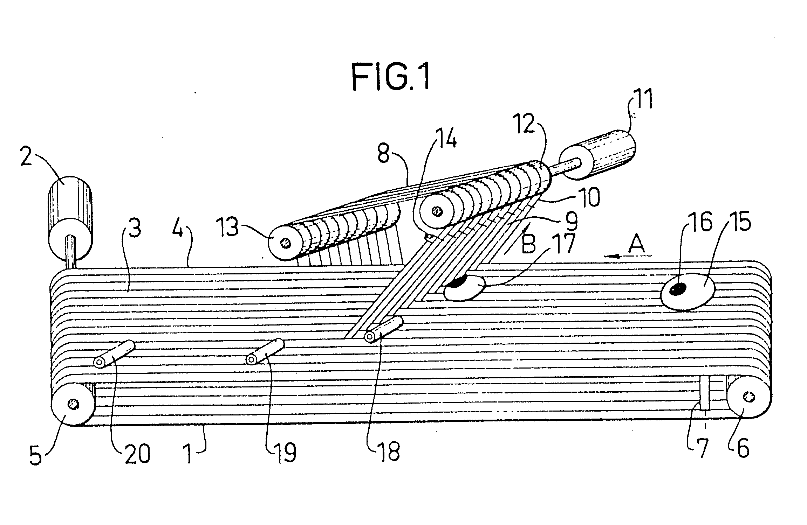

La fig. 1 illustre une première forme d'exécution d'un dispositif selon l'invention. Une première bande sans fin horizontale, désignée d'une manière générale par 1, laquelle est entraînée par un moteur 2, est constituée d'un tapis transporteur 3 comprenant un certain nombre de câbles ou fils espacés entre eux et dont l'un est désigné par 4. Les câbles ou fils défilent sur un rouleau d'entraînement 5 et un rouleau de guidage 6, et ces rouleaux sont munis de gorges périphériques pour guider les câbles ou fils. Un guidage complémentaire des câbles ou fils est assuré par des chevilles de guidage, indiquées schématiquement en 7, et qui sont agencées à la manière d'un peigne pour passer dans les espaces entre les câbles ou fils parallèles. Le cas échéant, le tapis horizontal de la bande peut également être supporté par une ou plusieurs plaques porteuses planes ou par plusieurs rouleaux porteurs, lesquels ne sont cependant pas montrés sur le dessin.

Une deuxième bande sans fin, désignée d'une manière générale par 8, est constituée tout comme la première bande d'un tapis 9 de câbles ou fils parallèles et espacés entre eux, dont l'un est désigné par 10. Ce transporteur est entraîné par le moteur 11 via le rouleau d'entraînement 12 et le rouleau de guidage 13, ainsi que via un ou plusieurs rouleaux de guidage complémentaires, dont l'agencement dépend du mode de guidage de la bande et qui n'est pas montré sur le dessin. Ces rouleaux sont aussi munis de gorges périphériques pour guider les câbles ou fils, et ces derniers sont également guidés au moyen de chevilles de guidage agencées sous forme de peigne, indiquées schématiquement en 14 et passant dans les espaces entre les câbles ou fils. D'autres jeux de chevilles de guidage peuvent être agencés à des endroits appropriés pour les deux bandes, si cela s'avère nécessaire pour assurer le parallélisme des câbles ou fils et un écartement constant entre eux.

Selon l'invention, la deuxième bande est agencée de manière qu'elle croise la première bande horizontale. Pour ce faire, les câbles ou fils de la deuxième bande défilent dans les espaces entre les câbles ou fils de la première bande. La deuxième bande est également agencée de manière qu'elle croise la première bande selon une ligne d'intersection formant un angle aigu avec la direction du mouvement de la première bande. Comme cela ressort des deux flèches de direction A et B sur le dessin (fig. 1), le tronçon de la deuxième bande qui croise la première bande horizontale est orienté obliquement vers le haut.

La fig. 1 montre également différentes séquences de l'enroulement. En 15, une crêpe avec farce 16 se trouve au commencement de la première bande et y a été déposée par un dispositif (non représenté). La crêpe est avancée par la bande jusqu'à la position 17, où elle rencontre le tronçon ascendant de la seconde bande 8. Le bord avant de la crêpe est alors relevé et comme la bande horizontale est toujours en mouvement, la crêpe est enroulée. A cela contribue également la deuxième bande qui forme un angle obtus avec la bande horizontale, mesuré dans un plan perpendiculaire à leur ligne d'intersection. Comme cette ligne d'intersection forme un angle aigu avec la direction de mouvement de la bande horizontale, la crêpe, tout en étant enroulée, est exposée à une force dirigée latéralement, de manière à être tout d'abord amenée dans la position 18 pour se dégager ensuite complètement du tapis de la deuxième bande dans la position 19. En 20, la crêpe arrive finalement à un endroit où elle est prise en charge au moyen d'un dispositif approprié (non représenté), et subit un traitement ultérieur, comme l'emballage et la congélation.

En procédant à des essais relativement simples, la largeur des bandes ainsi que leur vitesse peuvent être réglées de manière que la crêpe soit complètement enroulée avant de ne plus être en contact avec la bande oblique défilant vers le haut. Il est clair que la bande horizontale doit avoir une largeur suffisante en dehors de la bande défilant vers le haut pour que les crêpes enroulées puissent poursuivre leur chemin.

Il s'est avéré approprié que la deuxième bande croise la première selon une ligne d'intersection formant un angle d'environ 45° avec la direction du mouvement de la première bande, la première bande formant avec la deuxième un angle d'environ 135°, mesuré dans un plan perpendiculaire à leur ligne d'intersection, la direction du mouvement de la deuxième bande formant un angle d'environ 45° avec la ligne d'intersection des deux bandes.

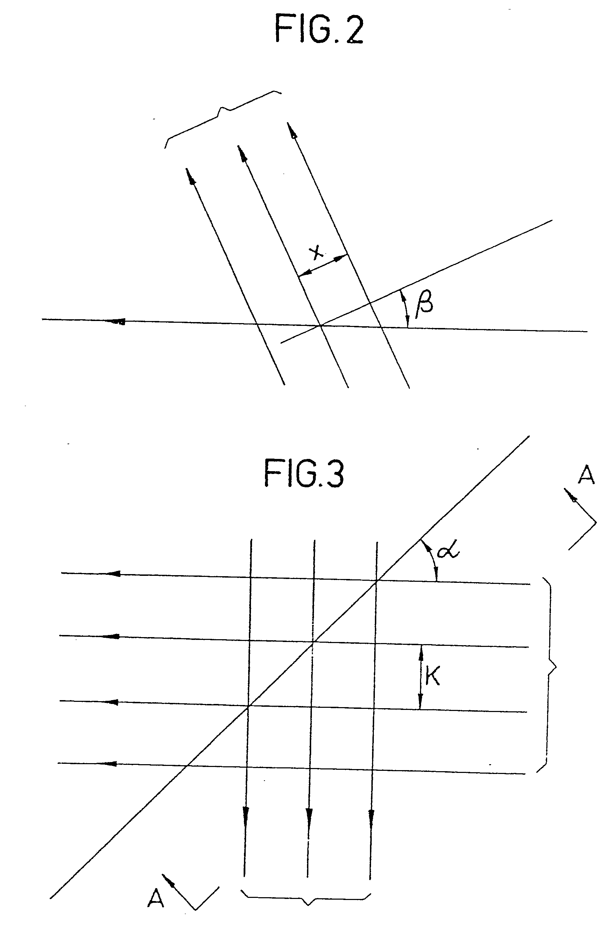

Le dimensionnement des deux bandes doit naturellement être adapté à la taille et au type des produits à enrouler. Ainsi, les câbles de la bande horizontale doivent être agencés avec un écartement suffisamment petit entre eux pour que les produits, qui sont souvent très mous et très fragiles, puissent être suffisamment supportés sans s'enfoncer d'une manière appréciable dans les espaces entre les câbles. D'un autre côté, l'écartement entre les câbles de la bande horizontale doit être suffisant pour que les câbles de la deuxième bande puissent y défiler sans frottement nuisible. Selon une forme d'exécution appropriée, les câbles ont un diamètre de 5 mm environ et l'écartement des câbles de la bande horizontale est de 15 mm environ. Pour la deuxième bande, la dimension des câbles et l'écartement entre ceux-ci n'ont pas une importance aussi grande, car il n'est pas nécessaire ici de supporter de la matière, mais pour avoir un effet d'enroulement suffisant, le produit doit naturellement subir l'influence d'un nombre suffisant de câbles en même temps. L'écartement minimal $X$ entre ces câbles est alors le suivant : $k \cos \beta / \sin \alpha$ où $k$ est l'écartement entre les câbles de la bande horizontale et $\beta$ et $\alpha$ sont les angles d'intersection entre les deux bandes et définis aux fig. 2 et 3, la fig. 3 étant une vue de dessus schématisée des bandes horizontale et oblique, tandis que la fig. 2 est une vue selon A-A de la fig. 3. Il est approprié que les câbles de la deuxième bande aient le même diamètre que ceux de la bande horizontale, de sorte qu'ils puissent défiler entre les câbles de la première bande.

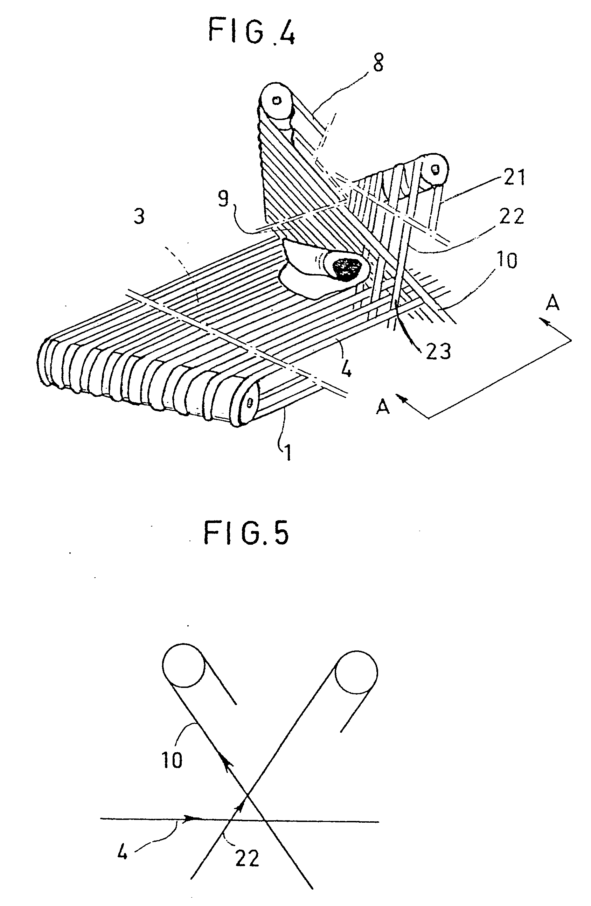

La fig. 4 illustre une deuxième forme d'exécution du dispositif selon l'invention qui s'est révélée être particulièrement appropriée pour traiter non seulement des produits minces comme les crêpes avec ou sans farce, mais encore des produits d'épaisseur sensiblement plus grande tels que des génoises, croissants ou des tranches de viande minces pour réaliser des roulades ou des paupiettes. Selon cette deuxième forme d'exécution, une troisième bande (21) est agencée de manière à croiser la première en amont de la ligne d'intersection de celle-ci avec la deuxième et la deuxième en aval de sa ligne d'intersection avec la première par défilement de ses fils ou câbles (22) entre les fils ou câbles de ces bandes et à délimiter ainsi un tronçon actif (23) se déplaçant vers le haut et vers l'arrière.

Ceci permet d'amorcer l'enroulement qui est ensuite achevé par la deuxième bande avec laquelle le produit est alors mis en contact. Les lignes d'intersection de la troisième bande avec la première et la deuxième sont parallèles à la ligne d'intersection des deux premières bandes et à distance l'une de l'autre inférieure au diamètre du produit après enroulement, de manière à assurer un contact du produit avec chacune des bandes pendant l'enroulement. Il s'est avéré approprié que les bandes se croisent selon des lignes d'intersection formant un angle d'environ 45° avec la direction du mouvement de la première bande, la première bande formant avec la première un angle d'environ 55°, les angles, entre les bandes, étant mesurés dans un plan perpendiculaire à leur ligne d'intersection. La direction du mouvement de la deuxième bande forme un angle d'environ 45° et la direction du mouvement de la troisième bande un angle d'environ 45° avec les lignes d'intersection des bandes comme indiqué sur la fig. 5 qui constitue une représentation schématique de l'agencement des bandes entre elles selon A-A de la fig. 4. Ce qui a été indiqué ci-dessus concernant le diamètre des fils ou câbles ainsi que leur écartement reste également valable pour cette forme d'exécution.

Egalement, la partie croisante de la troisième bande avec la première doit être moins large que la première bande, et de préférence de même largeur que la partie croisante de la deuxième bande avec la première, pour que les objets enroulés puissent poursuivre leur chemin.

Les câbles ou fils des bandes peuvent être conçus de différentes manières et être en différentes matières. Ainsi, il s'est avéré que des câbles en matière plastique : chlorure de polyvinyle (PVC), polyéthylène, polypropylène, polyesters ou polyamides, étaient utilisables, mais d'autres matières comme du métal peuvent également être employées. Comme le dispositif est principalement prévu pour la manutention de produits alimentaires, il est de la plus grande importance que les matières et les pièces d'appareillage utilisées puissent être nettoyées facilement d'une manière irréprochable du point de vue sanitaire. Dans la pratique, des câbles en chlorure de polyvinyle se sont avérés appropriés.

Les bandes ont été montrées ici entraînées par des moteurs électriques. Toutefois, l'entraînement peut également être réalisé au moyen de moteurs hydrauliques ou pneumatiques, et cela peut être avantageux pour un appareillage traitant des denrées alimentaires, dans une atmosphère humide et qui doit également être nettoyé très soigneusement, par exemple par lavage sous haute pression. Dans un tel cas, les moteurs électriques peuvent impliquer un risque de court-circuit et de jaillissement d'étincelles.

Le dispositif selon l'invention a été représenté avec référence à l'une des applications préférées, à savoir l'enroulement de crêpes avec farce. Toutefois, il est clair que le dispositif n'est pas seulement limité à cette utilisation et qu'il peut être employé dans chaque cas où il est question d'enrouler des objets en feuille et pliables plastiquement, et spécialement lorsque ces objets doivent être traités avec ménagement. Ici, il y a également lieu de noter que l'expression « objets en feuilles » doit être interprétée dans un sens large et comprend des objets avec une épaisseur marquée atteignant plusieurs centimètres. Ainsi, un dispositif selon l'invention serait également approprié pour produire une génoise roulée ou bien encore des roulades de viande. Dans ce dernier cas, les deux faces opposées de la mince tranche de viande doivent cependant être pliées vers le milieu, par exemple mécaniquement, afin de pouvoir obtenir une longueur désirée et égale des roulades de viande finies.

Les morceaux de matière en feuilles peuvent aussi avoir une forme arbitraire. Ainsi, ils peuvent être ronds, oblongs, carrés ou avoir une autre forme quelconque.

**Revendications**

1. Dispositif d'enroulement de morceaux de matière (15, 16) molle en forme de feuilles, caractérisé en ce qu'il comprend plusieurs bandes sans fin (1, 8, 21), chaque bande étant constituée de plusieurs éléments sans fin (4, 10, 22) espacés entre eux et parallèles à la direction du mouvement de la bande, une première bande (1) se déplaçant essentiellement dans un plan horizontal et au moins une deuxième bande (8) se déplaçant sur son tronçon actif dans un plan oblique par rapport au plan de la première bande, de sorte qu'elle croise la première bande (1) par défilement vers le haut de ses éléments (10) dans les espaces entre les éléments (4) de la première bande selon une ligne d'intersection formant un angle aigu ($\alpha$) avec la direction du mouvement de la première bande (1), l'aval de la première bande (1) par rapport à ladite ligne d'intersection formant avec l'aval du tronçon actif de la deuxième (8) un angle obtus, mesuré dans un plan perpendiculaire à leur ligne d'intersection, la direction du mouvement de la deuxième bande formant un angle aigu avec la ligne d'intersection des deux bandes dans la direction de la partie de ladite ligne située la plus en aval sur la première bande (1).

2. Dispositif selon la revendication 1, caractérisé en ce qu'il comprend deux bandes sans fin (1, 8).

3. Dispositif selon la revendication 1, caractérisé en ce qu'il comprend trois bandes sans fin (1, 8, 21), la troisième bande (21) se déplaçant dans un plan oblique par rapport au plan de la première bande et croisant la première (1) et la deuxième (8) bande par défilement vers le haut de ses éléments (22) dans les espaces entre les éléments (4, 10) desdites bandes (1, 8), la ligne d'intersection de la troisième (21) et de la deuxième bande (8) étant au-dessus du plan horizontal de la première bande (1) et sensiblement parallèle à la ligne d'intersection de la première (1) et de la deuxième (8) bande, la direction du mouvement de la troisième bande (21) formant un angle aigu avec chacune des directions du mouvement de la première (1) et de la deuxième bande (8).

4. Dispositif selon l'une des revendications 1 à 3, caractérisé en ce que les éléments constitutifs des bandes sont des câbles ou des fils (4, 10, 22).

5. Dispositif selon la revendication 2, caractérisé en ce que la deuxième bande (8) croise la première (1) selon une ligne d'intersection formant un angle d'environ 45° avec la direction du mouvement de la première bande, l'aval de la première bande (1) formant avec l'aval du tronçon actif de la deuxième (8) un angle d'environ 135°, mesuré dans un plan perpendiculaire à leur ligne d'intersection, la direction du mouvement de la deuxième bande (8) formant un angle d'environ 45° avec la ligne d'intersection des deux bandes prise dans le sens précité.

6. Dispositif selon la revendication 3, caractérisé en ce que les bandes (1, 8, 21) se croisent selon des lignes d'intersection formant chacune un angle d'environ 45° avec la direction du mouvement de la première bande, la première bande (1) formant avec la deuxième (8) un angle d'environ 135°, la troisième bande (21) formant avec la première (1) un angle d'environ 55°, les angles, entre les bandes, étant mesurés en aval des bandes dans un plan perpendiculaire à leur ligne d'intersection, la direction du mouvement de la deuxième bande (8) formant un angle d'environ 45° et la direction du mouvement de la troisième bande (21) formant un angle d'environ 45° avec les lignes d'intersection des bandes prises chacune dans le sens précité.

7. Dispositif selon la revendication 4, caractérisé en ce que les câbles ou fils (4, 10, 22) ont un diamètre d'environ 5 mm et un écartement d'environ 15 mm.

8. Dispositif selon l'une des revendications 1 à 3, caractérisé en ce que la première bande (1) s'étend latéralement en dehors de la ou des parties croisantes de l'autre ou des autres bandes.

**Claims**

1. A machine for rolling pieces of soft material (15, 16) in leaf form, characterized in that it comprises a plurality of endless belts (1, 8, 21), each belt being formed by a plurality of endless elements (4, 10, 22) spaced apart from one another and running parallel to the direction of movement of the belt, the plurality of endless belts being made up of a first belt (1) moving substantially in a horizontal plane and at least one second belt (8) moving in an oblique plane relative to the plane of the first belt so that it crosses the first belt (1) by passage of its elements (10) through the spaces between the elements (4) of the first belt along a line of intersection which forms an acute angle $(\alpha)$ with the direction of movement of the first belt (1), the part of the first belt (1) which is situated downwards relative to said line of intersection forming an obtuse angle with the part of the second belt (8) which is situated downwards relative to said line of intersection, as measured in a plane perpendicular to said line of intersection, the direction of movement of the second belt forming an acute angle with the line of intersection of the two belts in the direction of the part of said line which is situated the most downwards on the first belt (1).

2. A machine as claimed in claim 1, which comprises two endless belts (1, 8).

3. A machine as claimed in claim 1, which comprises three endless belts (1, 8, 21), the third belt (21) moving in an oblique plane relative to the plane of the first belt and crossing the first (1) and second (8) belts by passage of its elements (22) through the spaces between the elements (4, 10) of these two belts (1, 8), the line of intersection between the third belt (21) and the second belt (8) being above the horizontal plane of the first belt (1) and substantially parallel to the line of intersection of the first (1) and second (8) belts, the direction of movement of the third belt (21) forming an acute angle with each of the directions of movement of the first (1) and second (8) belts.

4. A machine as claimed in any of claims 1 to 3, wherein the constituent elements of the belts are cords or strings (4, 10, 22).

5. A machine as claimed in claim 2, wherein the second belt (8) crosses the first belt (1) along a line of intersection which forms an angle of approximately 45° with the direction of movement of the first belt, the part of the first belt (1) downwards forming with the part of second belt (8) downwards an angle of approximately 135°, as measured in a plane perpendicular to their line of intersection, the direction of movement of the second belt (8) forming an angle of approximately 45° with the line of intersection of the two belts.

6. A machine as claimed in claim 3, wherein the belts (1, 8, 21) cross along lines of intersection which form an angle of approximately 45° with the direction of movement of the first belt, the first belt (1) forming an angle of approximately 135° with the second belt (8), the third belt (21) forming an angle of approximately 55° with the first belt (1), the angles between the belts being measured downwards on the belts in a plane perpendicular to their line of intersection, the direction of movement of the second belt (8) forming an angle of approximately 45° and the direction of movement of the third belt (21) forming an angle of approximately 45° with the lines of intersection of the belts, taken in the aforesaid direction.

7. A machine as claimed 4, wherein the cords or strings (4, 10, 22) have a diameter of approximately 5 mm and a spacing of approximately 15 mm.

8. A machine as claimed in any of claims 1 to 3, wherein the first belt (1) extends laterally beyond the crossing part(s) of the other belt(s).

**Ansprüche**

1. Vorrichtung zum Aufrollen von weichen Materialbahnstücken (15, 16) in Form von Folien, dadurch gekennzeichnet, daß si mehrere endlose Bänder (1, 8, 21) aufweist, die je aus mehreren endlosen Elementen (4, 10, 22) gebildet sind, welche gegenseitigen Abstand haben und zur Bewegungsrichtung des Bandes parellel sind, wobei ein erstes Band (1) sich im wesentlichen in einer Horizontalebene bewegt und zumindest ein zweites Band (8) sich auf seinem wirksamen Abschnitt in einer zur Ebene des ersten Bandes geneigten Ebene bewegt, derart, daß es das erste Band (1) kreuzt, indem sich seine Elemente (10) in den Zwischenräumen zwischen den Elementen (4) des ersten Bandes nach oben bewegen, gemäß einer Kreuzungslinie, die einen spitzen Winkel (α) mit der Bewegungsrichtung des ersten Bandes (1) einschließt, wobei der bezüglich der Kreuzungslinie stromabwärtige Teil des ersten Bandes (1) mit dem stromabwärtigen Teil des wirksamen Abschnittes des zweiten Bandes (8) einen stumpfen Winkel einschließt, gemessen in einer Ebene senkrecht zu ihrer Kreuzungslinie, und wobei die Bewegungsrichtung des zweiten Bandes mit der Kreuzungslinie der beiden Bänder einen spitzen Winkel einschließt, in Richtung jenes Abschnittes der erwähnten Linie, der auf dem ersten Band (1) am weitesten stromabwärts liegt.

2. Vorrichtung nach Anspruch 1, dadurch gekennzeichnet, daß sie zwei endlose Bänder (1, 8) aufweist.

3. Vorrichtung nach Anspruch 1, dadurch gekennzeichnet, daß sie drei endlose Bänder (1, 8, 21) aufweist, von denen das dritte Band (21) sich in einer zur Ebene des ersten Bandes geneigten Ebene bewegt und das erste Band (1) sowie das zweite Band (8) kreuzt, indem seine Elemente (22) sich in den Zwischenräumen zwischen den Elementen (4, 10) der erwähnten Bänder (1, 8) nach oben bewegen, wobei die Kreuzungslinie des dritten Bandes (21) und des zweiten Bandes (8) oberhalb der Horizontalebene des ersten Bandes und im wesentlichen parallel zur Kreuzungslinie des ersten Bandes (1) und des zweiten Bandes (8) liegt, und wobei die Bewegungsrichtung des dritten Bandes (21) einen spitzen Winkel mit jeder der Bewegungsrichtungen des ersten Bandes (1) und des zweiten Bandes (8) einschließt.

4. Vorrichtung nach einem der Ansprüche 1 bis 3, dadurch gekennzeichnet, daß die die Bänder bildenden Elemente Kabel oder Drähte (4, 10, 22) sind.

5. Vorrichtung nach Anspruch 2, dadurch gekennzeichnet, daß das zweite Band (8) das erste Band (1) gemäß einer Kreuzungslinie kreuzt, die einen Winkel von etwa 45° mit der Bewegungsrichtung des ersten Bandes einschließt, wobei der stromabwärtige Teil des ersten Bandes (1) mit dem stromabwärtigen wirksamen Abschnitt des zweiten Bandes (8) einen Winkel von etwa 135° einschließt, gemessen in einer Ebene senkrecht zu ihrer Kreuzungslinie, und wobei die Bewegungsrichtung des zweiten Bandes (8) einen Winkel von etwa 45° mit der Kreuzungslinie der beiden Bänder, gemessen in dem vorerwähnten Sinn, einschließt.

6. Vorrichtung nach Anspruch 3, dadurch gekennzeichnet, daß die Bänder (1, 8, 21) sich gemäß Kreuzungslinien kreuzen, die je einen Winkel von etwa 45° mit der Bewegungsrichtung des ersten Bandes einschließen, wobei das erste Band (1) mit dem zweiten Band (8) einen Winkel von etwa 135° und das dritte Band (21) mit dem ersten Band (1) einen Winkel von etwa 55° einschließt, wobei ferner die Winkel zwischen den Bändern im stromabwärtigen Teil der Bänder in einer zu ihrer Kreuzungslinie senkrechten Ebene gemessen werden, und wobei die Bewegungsrichtung des zweiten Bandes (8) einen Winkel von etwa 45° und die Bewegungsrichtung des dritten Bandes (21) einen Winkel von etwa 45° mit den Kreuzungslinien der Bänder einschließen, gemessen jeweils in dem vorerwähnten Sinn.

7. Vorrichtung nach Anspruch 4, dadurch gekennzeichnet, daß die Kabel oder Drähte (4, 10, 22) einen Durchmesser von etwa 5 mm und einen gegenseitigen Abstand von etwa 15 mm haben.

8. Vorrichtung nach einem der Ansprüche 1 bis 3, dadurch gekennzeichnet, daß das erste Band (1) sich seitlich über den oder die kreuzenden Abschnitte des anderen oder der anderen Bänder hinaus erstreckt.

# FIG.1

# FIG.2

# FIG.3

# FIG .4

# FIG.5